Europäisches Patentamt

European Patent Office

Office européen des brevets

(11) Veröffentlichungsnummer: **0 333 894 B1**

# (12) EUROPÄISCHE PATENTSCHRIFT

(45) Veröffentlichungstag der Patentschrift: **16.12.92**

(21) Anmeldenummer: **88104516.5**

(22) Anmeldetag: **22.03.88**

(51) Int. Cl.⁵: **F41G 3/06**

(54) **Nachführvorrichtung.**

(43) Veröffentlichungstag der Anmeldung:
**27.09.89 Patentblatt 89/39**

(45) Bekanntmachung des Hinweises auf die
Patenterteilung:
**16.12.92 Patentblatt 92/51**

(84) Benannte Vertragsstaaten:
**CH DE LI NL SE**

(56) Entgegenhaltungen:
**FR-A- 2 618 920**
**GB-A- 2 098 706**
**US-A- 4 038 521**

**H. UNBEHAUEN, Regelungstechnik, Vieweg &
Sohn, Braunschweig/Wiesbaden, DE, 1982,
Seiten 8-15**

(73) Patentinhaber: **Honeywell Regelsysteme
GmbH
Kaiserleistrasse 55
W-6050 Offenbach am Main(DE)**

(72) Erfinder: **Rothmann, Knut, Dipl. Phys.
Gustav-Hochstrasse 52
W-6450 Hanau(DE)**
Erfinder: **Drüner, Wolfgang, Dipl. Ing.
Geschw.-Schollstrasse 1
W-6454 Bruchköbel(DE)**

(74) Vertreter: **Herzbach, Dieter et al
Honeywell Europe S.A. Holding KG Patent &
License Dept. Kaiserleistrasse 55 Postfach
10 08 65
W-6050 Offenbach am Main(DE)**

EP 0 333 894 B1

## Beschreibung

Die vorliegende Erfindung bezieht sich auf eine Nachführvorrichtung nach dem Gattungsbegriff des Patentanspruches 1.

Die Aufgabe, ein System einem führenden System nachzuführen, besteht oftmals in der Technik und kann beispielsweise durch eine elektrische Welle gelöst werden. Ähnliches leistet eine Folgeregelung, wie sie beispielsweise auf Seite 11 des Buches von H. Unbehauen, Regelungstechnik I, Vieweg & Sohn 1982, dargestellt ist. Dort wird die Stellung eines Führungspotentiometers und eines Folgepotentiometers miteinander verglichen und bei Abweichung über einen von einem Verstärker gesteuerten Motor eine Nachführung des Folgepotentiometers vorgenommen.

Sehr einfach ist eine mechanische Lösung, bei der das führende und das geführte System über ein Parallelogramm mechanisch miteinander gekoppelt sind. Damit lassen sich Drehbewegungen des einen Systems einfach und direkt auf das andere System übertragen (s. US-A-4 038 521).

Die Genauigkeit dieser Kopplung wird beeinflußt durch die Symmetrie des Parallelogramms. Neben den statisch vorhandenen Fertigungstoleranzen treten als weitere Fehler thermische Einflüsse auf das Gestänge des Parallelogramms sowie Verschleißerscheinungen, wie z.B. Lose in den Gelenkpunkten auf.

Treten beispielsweise Schwingungen zwischen beiden Systemen auf, durch die die Drehachsen der Systeme in bezug aufeinander einer Abstandsänderung unterliegen, so kann man ein offenes Parallelogrammgestänge als Nachführvorrichtung verwenden. Ein solches offenes Parallelogrammgestänge gestattet Veränderungen in der räumlichen Zuordnung der Befestigungspunkte der gekoppelten Systeme, wobei jedoch eine Störung der Parallelogrammsymmetrie auftritt.

In all diesen Fällen werden Drehbewegungen des führenden Systems nicht mehr winkelgetreu an das geführte System weitergegeben, so daß der Gleichlauf zwischen den Systemen beeinträchtigt wird. Bei bestimmten Anwendungsfällen werden erhebliche Anforderungen an die Güte und die zeitliche Konstanz des Gleichlaufes gestellt, so daß eine Korrektur der geschilderten Einflüsse unbedingt erforderlich ist. Ein solcher Anwendungsfall liegt beispielsweise bei der Kopplung einer Zieloptik mit einer Waffe vor.

Es ist daher die Aufgabe der vorliegenden Erfindung, eine einfache Nachführvorrichtung anzugeben, die sowohl statische als auch dynamische Fehler zu korrigieren gestattet. Die Lösung dieser Aufgabe gelingt gemäß den kennzeichnenden Merkmalen des Patentanspruches 1. Weitere vorteilhafte Ausgestaltungen der erfindungsgemäßen Nachführvorrichtung sind den Unteransprüchen entnehmbar.

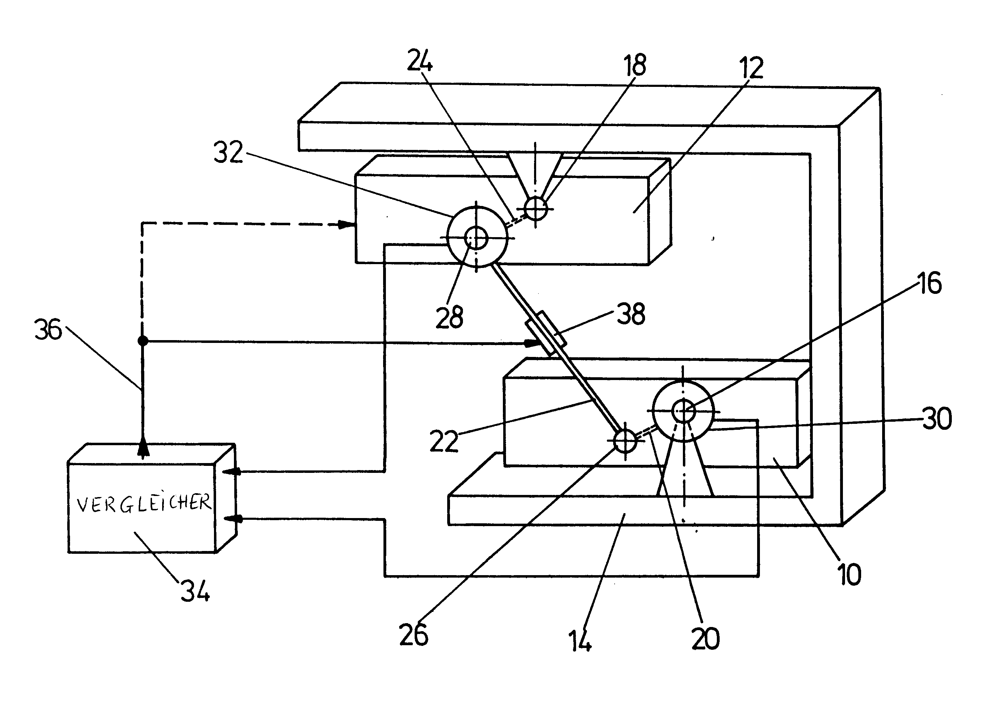

Anhand der einzigen Figur der beiliegenden Zeichnung sei im folgenden ein Ausführungsbeispiel der Nachführvorrichtung näher beschrieben.

Ein führendes System 10 ist ebenso wie ein geführtes System 12 an mit einer gemeinsamen Basis 14 verbundenen Drehachsen 16 und 18 drehbar gelagert. Ein offenes Parallelogramm, bestehend aus 3 Stangen 20, 22 und 24, verbindet beide Systeme 10 und 12 miteinander. Die drei Stangen sind in zwei Gelenkachsen 26 und 28 miteinander verbunden, die von den Drehachsen 16 und 18 den gleichen Abstand aufweisen. Die beiden Drehachsen 16 und 18 sind nicht miteinander verbunden, so daß sie in bezug aufeinander eine hier zu korrigierende Relativbewegung ausführen können. Die beiden Gelenkachsen 26 und 28 können prinzipiell auch an dem führenden und dem geführten System 10 bzw. 12 unmittelbar so angeordnet sein, daß sie zusammen mit der Verbindungsstange 22 und den Drehachsen 16 und 18 ein Parallelogramm ergeben. Auf die Stangen 20 und 24 kann in diesem Fall verzichtet werden.

Ein erster absolut arbeitender Drehwinkelgeber 30 sitzt auf der Drehachse 16 des führenden Systems 10. Ferner sitzt ein zweiter absolut arbeitender Drehwinkelgeber 32 auf der Gelenkachse des geführten Systems 12. Prinzipiell könnten auch beide Drehwinkelgeber auf den beiden Drehachsen sitzen; durch thermische Verwerfungen können jedoch beispielsweise um die Drehachse 18 Drehungen auftreten, die für den Gleichlauf der beiden Systeme ohne Bedeutung sind, und daher zu einer falschen Signalgabe führen würden. Die getroffene Anordnung ist daher vorzuziehen.

Die Drehwinkelsignale beider Drehwinkelgeber 30 und 32 werden einer Additions/Subtraktionseinrichtung 34 zugeführt, die die Differenz der Absolutwerte als ein Stellsignal 36 ausgibt. Dieses Stellsignal 36 wird vorzugsweise einem Stellglied 38 zugeführt, welches eine Längenänderung der Verbindungsstange 22 bewirkt. In gleicher Weise kann das Stellsignal 36 als Führungsgröße einem unterlagerten Regelkreis in dem geführten System 12 aufgeschaltet werden. Im ersten Fall wird die Längenänderung zwischen den beiden Drehachsen 16 und 18 durch eine Anpassung der Länge der Verbindungsstange 22 ausgeglichen. Im zweiten Fall wird eine unerwünschte Drehbewegung, die durch die Asymmetrie des Parallelogramms ausgelöst wird, innerhalb des geführten Systems 2 durch eine entsprechende Korrekturdrehung dieses Systems korrigiert.

## Patentansprüche

1. Nachführvorrichtung mit einem führenden System (10) und einem geführten System (12), mit Gebern (30, 32) zur Erfassung der Drehwinkelstellung beider Systeme und mit einer Additions/Subtraktionseinrichtung (34) zur Erfassung der Summe bzw. der Differenz beider Drehwinkelstellungen, wobei der ermittelte Wert (36) zur Nachführung des geführten Systems (12) benutzt wird, **dadurch gekennzeichnet,** daß beide Systeme (10, 12) über eine an je einer Gelenkachse (26, 28) angelenkte Verbindungsstange (22) miteinander verbunden sind und daß der ermittelte Wert (36) der Additions/Subtraktionseinrichtung (34) auf ein entsprechendes Längenstellglied (38) der Verbindungsstange (22) einwirkt.

2. Vorrichtung nach Anspruch 1, **dadurch gekennzeichnet,** daß als Geber absolute Drehwinkelgeber (30, 32) zur Anwendung gelangen.

3. Vorrichtung nach Anspruch 2, **dadurch gekennzeichnet,** daß ein erster absoluter Drehwinkelgeber (30) mit der Drehachse (16) des führenden Systems (10) und ein zweiter absoluter Drehwinkelgeber (32) mit dem Gelenkpunkt (28) des geführten Systems (12) zusammenwirkt.

**Claims**

1. Follow-up device comprising a master system (10) and a slave system (12) and having transmitters (30,32) for evaluating the angle of rotation of both systems and further comprising an addition/subtraction means (34) for evaluating the sum or the difference, respectively of both angles of rotation, whereat the evaluated value (36) is used for the follow-up of the slave system (12), **characterized in that** both systems (10,12) are connected with each other by means of a connecting rod (22) which is linked to each an articulation axle (26,28) and that the value evaluated by the addition/subtraction means (34) acts upon a length control element (38) of said connecting rod (22).

2. Device according to claim 1, **characterized in that** absolute rotational angle transmitters (30,32) are used as transmitters.

3. Device according to claim 2, **characterized in that** a first absolute rotational angle transmitter (30) cooperates with the rotational axle of the master system (10) and a second absolute rotational angle transmitter (32) cooperates with the articulation point (28) of the master system (12).

**Revendications**

1. Dispositif de poursuite comportant un système guidant (10) et un système guidé (12), des émetteurs (30, 32) pour la saisie de la position angulaire de rotation des deux systèmes, et un dispositif d'addition et de soustraction (34) pour la détection de la somme ou de la différence des deux positions angulaires de rotation, la valeur déterminée (36) étant utilisée pour la poursuite du système guidé (12), caractérisé en ce que les deux systèmes (10, 12) sont reliés entre-eux au moyen d'une tige de liaison (22) articulée sur chacun d'entre-eux par l'intermédiaire d'un axe d'articulation (26, 28), et en ce que la valeur déterminée (36) du dispositif d'addition et de soustraction (34) agit sur un organe de réglage de longueur (38), approprié, de la tige de liaison (22).

2. Dispositif selon la revendication 1, caractérisé en ce qu'en quise d'émetteurs, on utilise des émetteurs d'angle de rotation absolu (30, 32).

3. Dispositif selon la revendication 2, caractérisé en ce qu'un premier émetteur d'angle de rotation absolu (30) coopère avec l'axe de rotation (16) du système guidant (10), et un second capteur d'angle de rotation absolu (32) coopère avec le point d'articulation (28) du système guidé (12).